# EUROPEAN PATENT APPLICATION

(11) **EP 1 560 437 A2**
(43) Date of publication of application: **03.08.2005**
(21) Application number: 05250271.3
(22) Date of filing: 20.01.2005
(51) Int. Cl.: H04N 7/173, G06F 17/30

(54) **Television program searching system**

(30) Priority: 02.02.2004 GB 0402257
(71) Applicant: Pioneer Digital Design Centre Ltd, Slough SL2 4QP (GB)
(72) Inventor: Koh, Wee Keng, c/oPioneer Digital Des. Centre Ltd., Stoke Poges, Slough SL2 4QP (GB)
(74) Representative: Haley, Stephen

(57) **Abstract**

A system for constructing and outputting a search criterion for use in searching digital television information. The system comprises a digital television receiver which receives a broadcast in use. Means for displaying at least one semantic of programme information associated with a received broadcast and means for selecting at least one of the displayed at least one semantics. Means is provided for retrieving data associated with the at least one selected semantic, and means select at least some of the retrieved data and converts the selected data and its associated at least one semantic into a search criterion supported by a search engine. Output means outputs, in use, the search criterion to the search engine

## Description

The present invention relates to a system for searching for digital television program information and in particular to a searching system which does not require text to be input by a viewer.

Traditionally, digital television viewers use an Electronic Program Guide (EPG) to find programs that they want to watch. The EPG displays a table with program titles and showing times. Now, particularly with the introduction of Digital Video Recorders (DVRs), new program information services are being introduced which offer more detailed program information.

As all digital television program information has an associated set of rich descriptors forming content metadata, systems have been built to enable viewers to search within program information by entering search terms on a virtual keyboard on the television screen. Although text searching returns desirable results, the process of entering search criteria by means of entering text with a virtual keyboard is a laborious task for the viewer. The action of actually entering text is cumbersome and before this can be done, the viewer needs to know exactly what he is looking for and how to spell it.

The present invention aims to overcome some of the problems associated with conventional searching techniques.

According to the present invention there is provided a system for constructing and outputting a search criterion for use in searching digital television information, the system comprising:
a digital television receiver which receives a broadcast in use;
means for displaying at least one semantic of programme information associated with a received broadcast;
means for selecting at least one of the displayed at least one semantics;
means for retrieving data associated with the at least one selected semantic;
means for selecting at least some of the retrieved data;
means for converting the selected data and its associated at least one semantic into a search criterion supported by a search engine;
output means which outputs, in use, the search criterion to the search engine.

According to the present invention there is also provided a method of constructing a search criterion for use in searching digital television information, the method comprising the steps of:
receiving a broadcast with a digital television receiver;
displaying at least one semantic of programme information associated with a received broadcast;
selecting at least one of the displayed at least one semantics;
retrieving data associated with the at least one selected semantic;
selecting at least some of the retrieved data;
converting the selected data and its associated at least one semantic into a search criterion supported by a search engine;
outputting the search criterion to the search engine.

The present invention provides a system that enables a viewer to create a search criteria without entering text. The systems uses the descriptors of TV program content as the basis for finding other content. Resulting search criteria can then be used as queries for obtaining the viewer's preferred programs.

Examples of the present invention will now be described with reference to the accompanying drawings, in which:
Figure 1 shows a schematic diagram of an example system according to the present invention in a broadcast only (unidirectional) environment;
Figure 2 shows a schematic diagram of an example system according to the present invention in a connected (bidirectional) environment;
Figures 3 to 5 show example schematic diagrams of a program information screen requested by a viewer while watching a television program, with a system according the present invention;
Figure 6 shows an example schematic diagram of a screen showing a search criteria list, with a system according to the present invention; and
Figure 7 shows an example schematic diagram of a screen with which a user can use constructed search criteria, with a system according to the present invention.

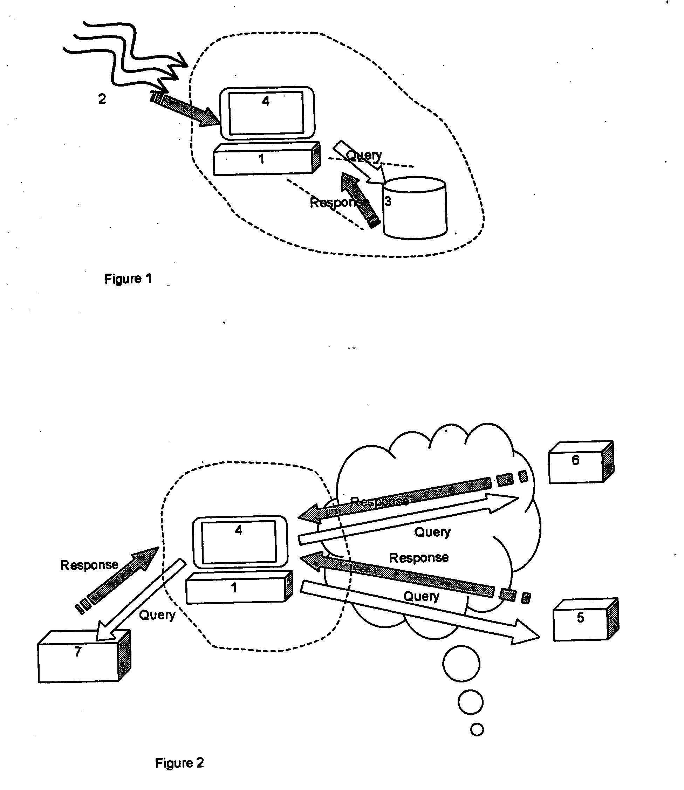

The system of the present invention can operate in a broadcast only environment, as shown in figure 1, or in a connected environment, as shown in figure 2, or in a mixture of the two. Referring to figure 1, in a broadcast only environment, a digital receiver 1 receives a broadcast 2 (which can be a DVB-T, DVB-C or DVB-S standard). The broadcast 2 includes television programs and program information about the television programs (which includes a description of how to locate and retrieve a television program). The program information is stored in a local database 3 which is part of the receiver 1.

When a viewer is watching a program, he can construct search criteria based on information about that program by means of the system of the present invention, which is also part of the receiver 1. A viewer can request a program information screen on the display 4 and use this as a starting point for construction of the search criteria. When the viewer acts on a search criteria that he has derived, the system forms a suitable search expression (syntax) depending on the protocol and fields supported by the search engine. In this case the search engine is part of the receiver 1.

In a connected environment as shown in figure 2, program information (which is sent separately from the audio and video content of a broadcast) may come from different sources having the same well-defined structure, for example, broadcast 5, or other devices connected to the receiver such as the World Wide Web 6 and other receivers 7. In this case, the search engines handling the search will not be part of the receiver 1 but will be remote. The system is able to query a service on the World Wide Web because those services publish searchable fields and support a 'query-response' protocol. The system is able to query another digital receiver using peer-to-peer technology.

Program information is in the form of content metadata and has well defined semantics. Assuming structured program information, the semantics are the well-defined (published) meanings of the data contained in the program information. The content metadata may be in the form of an Extensible Mark-up Language (XML) document, in which case the semantics of the information contained in the content metadata may be defined in a XML Schema Definition (XSD). In a broadcast only environment, the program information returned by the local database 3 may have the same structure (data and meaning) as that received from the broadcast 2. Alternatively, the format may differ, for example the broadcast 2 may send XML documents whilst the database returns Data objects.

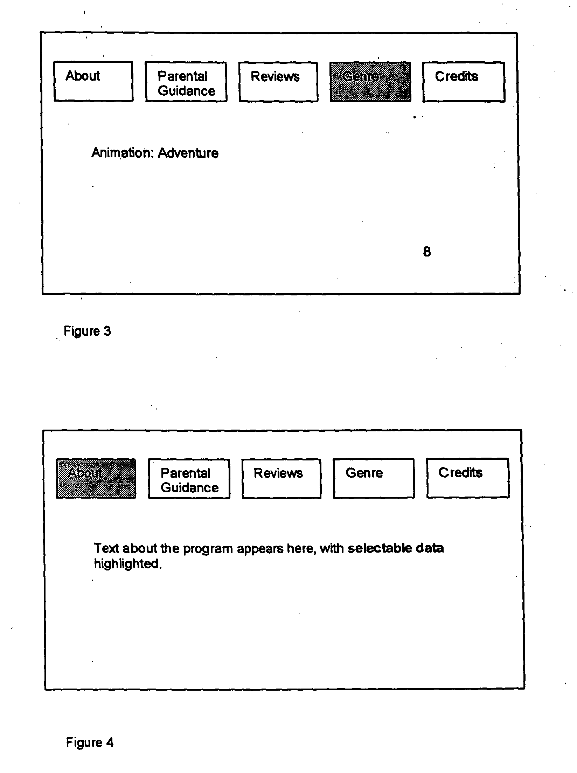

When a viewer requests the program information screen 8 while watching a TV program, the system of the present invention prominently displays the content semantics of the program, which can be named by their descriptors. As shown in figures 3 to 5, where the descriptors for the semantics "about", "parental guidance", "reviews", "genre" and "credits" are shown, each descriptor (or other label of semantic) preferably has a tab pane so that data can be accessed directly. An alternative method is to use an icon for each semantic. This feature enables the viewer to identify specifically which semantic of a program he is interested in. Also, if there are many semantics for the program, he can pin-point a particular descriptor quickly.

When a viewer selects a particular descriptor, the data associated with the semantic is displayed. For example, if the viewer selects the "genre" tab from the program information screen as is shown in figure 3, the system shows him the genre of the current program, which is in this case shown to be an animated adventure.

Not all of the content semantics for a program are relevant to a viewer. Some parts of the metadata are there to enable a receiver to locate and retrieve content (processes that work without viewer intervention). This system only selects semantics that are useful to the viewer for searching, for example the descriptors shown in figures 3 to 5.

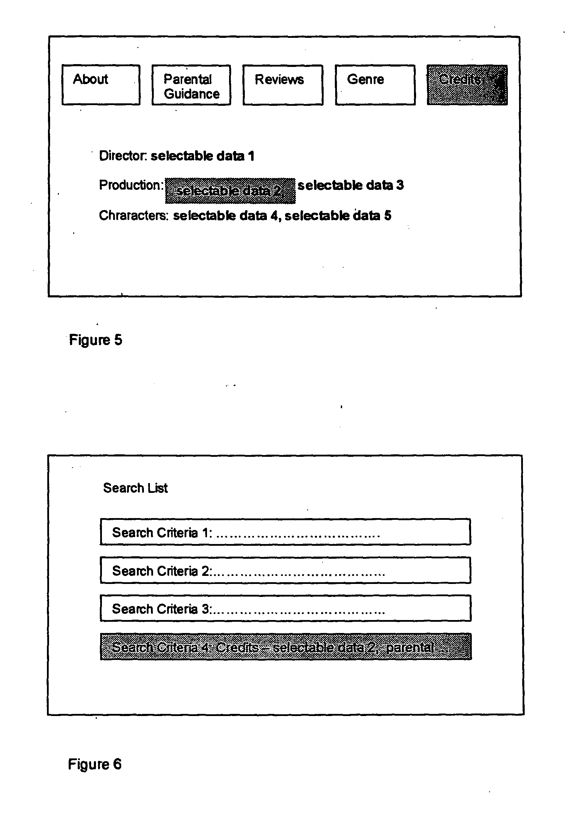

The viewer can navigate to a descriptor or other label in the program information, as shown in figures 4 and 5. In the situation where data is in the form of sentences or passages, as in the synopsis of a program (see figure 4), the system supports navigation to keywords within the passage. Keywords may be part of the content metadata, or deduced by the system. A method for deducing keywords is by using domain knowledge based on the genre of the content. That is, for example, to identify keywords within the semantic "about" the data of "genre" is used. For example, if the content is an adventure program, then words like "ocean" and "jungle" may be meaningful keywords and are selectable. Selectable data is visually differentiated from other data. Also, the currently selected data is highlighted to aid navigation.

There can either be dedicated buttons, for example on a remote control, or general buttons temporarily assigned for this purpose of selecting descriptors. When the viewer presses the relevant buttons, the system provides a feedback (in figure 5, "selectable data 2" is highlighted). A query is constructed by using the semantics (property) as the field, and the data as the value. For the example in figure 5, field = "production" and value = "selectable data 2".

Once the viewer has selected a descriptor, he can indicate to the system whether he wants "more of" or "less of" programs containing this descriptor. Generally, "more of" signals that the user likes a particular property of the program, whilst "less of" signals the opposite. The system translates these signals to a more precise criteria, containing a field, a value and an operator. Using the semantics of the program information, data is divided into three categories with corresponding translations to query terms.

The first category is free text which is unrestricted words, such as keywords in the program's synopsis. The system translates "more of" to "like". "Less of" translates to "not like". Secondly, controlled terms are data that must be any of a well defined set of terms. The system translates "more of" to "equals". "Less of" translates to "not equals". Thirdly, there are bounded numerical values or ranges, for example "minimum viewer age", where the value must be a positive integer. The system translates "more of" to "equals or more than". "Less of" translates to "less than". There are cases where the meaning of the range depends on the another data. For example, "Review Ratings" issued by "Holliwood.com" (first data) are in the range of "0 to 10" (second data), with higher numbers being better reviews. In this situation, the system will combine data, producing something like "(field = Reviewer; value = Holliwood.com operator = equal) AND (field = Rating; value = 9; operator = more than)".

For the same program information screen, each "more of" or "less of" indication is translated into a query. All queries are combined into one compound query, thus narrowing the search. This compound query is the search criteria. The search criteria is ended when the program information screen 8 is closed. However, the system will also start a new search criteria if the viewer tells the system to. Hence, to avoid constructing a search that is too narrow, this system lets the viewer know the current scope of the search.

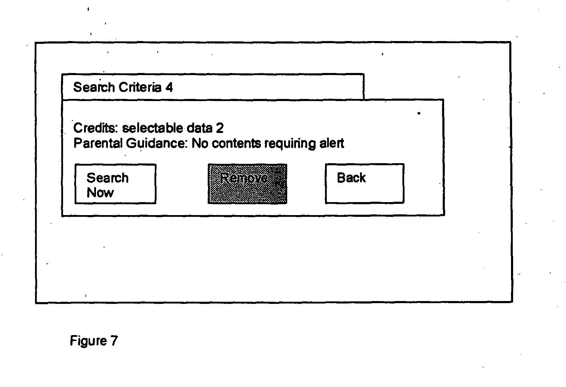

The system maintains all the search criteria that the viewer constructs using the methods described above. This list may be viewed and manipulated by the viewer, for example deleting fields or combining several fields. Figure 7 shows a screen displaying the list. From this list, the viewer can select one criteria to act on, shown to be "search criteria 4" in figure 7 and figure 8.

When the viewer uses this search criteria to find content, the system forms a suitable search expression (syntax), depending on the protocol and fields supported by the search engine. As mentioned earlier, engines handling the search may be local (in the receiver) or remote (a service in another device connected to the receiver). Existing search criteria can also be used to filter program information delivered by broadcast, and thus perform automatic program selection.

The main advantages of this system are that it does not require a viewer to input text, it supports searching even when the viewer does not know exactly what he is looking for (for example, if he likes the actor in the TV programme he is currently watching, but he does not know the actor's name) and it supports compound queries.

## Claims

1. A system for constructing and outputting a search criterion for use in searching digital television information, the system comprising:
a digital television receiver which receives a broadcast in use;
means for displaying at least one semantic of programme information associated with a received broadcast;
means for selecting at least one of the displayed at least one semantics;
means for retrieving data associated with the at least one selected semantic;
means for selecting at least some of the retrieved data;
means for converting the selected data and its associated at least one semantic into a search criterion supported by a search engine;
output means which outputs, in use, the search criterion to the search engine.

2. A system according to claim 1, wherein the means for displaying at least one semantic displays, in use, the descriptor associated with the at least one semantic.

3. A system according to claim 1, wherein the means for displaying at least one semantic displays, in use, an icon representing the at least one semantic.

4. A system according to any preceding claim, wherein the search criterion is output to a search engine located locally.

5. A system according to claims 1 to 3, wherein the search criterion is output to a search engine located remotely.

6. A system according to any preceding claim, further comprising means for identifying keywords in the data.

7. A system according to claim 6, wherein the means for identifying keywords uses domain knowledge based on the genre of the content of the program information to identify keywords.

8. A method of constructing a search criterion for use in searching digital television information, the method comprising the steps of:
receiving a broadcast with a digital television receiver;
displaying at least one semantic of programme information associated with a received broadcast;
selecting at least one of the displayed at least one semantics;
retrieving data associated with the at least one selected semantic;
selecting at least some of the retrieved data;
converting the selected data and its associated at least one semantic into a search criterion supported by a search engine;
outputting the search criterion to the search engine.

9. A method according to claim 8, wherein the search criterion is output to a search engine located locally.

10. A method according to claim 8, wherein the search criterion is output to a search engine located remotely.

11. A method according to any of claims 8 to 10, further comprising the step of identifying keywords in the data.

12. A system according to claim 11, wherein keywords are identified using domain knowledge based on the genre of the content of the program information.
